# FASCICULE DE BREVET EUROPEEN

(11) **EP 3 298 812 B1**
(45) Date de publication et mention de la délivrance du brevet: **15.05.2024**
(21) Numéro de dépôt: 16729027.9
(22) Date de dépôt: 17.05.2016
(51) Int. Cl.: H04W 8/18, H04W 8/20, H04W 12/30, H04L 61/4511, H04W 12/40

(54) **CHARGEMENT DE PROFIL D'ABONNEMENT DANS UNE CARTE SIM EMBARQUÉE**
LADEN EINES TEILNEHMERPROFILS IN EINE EINGEBETTETE SIM-KARTE
LOADING OF SUBSCRIPTION PROFILE INTO AN EMBEDDED SIM CARD

(30) Priorité: 21.05.2015 FR 1554595
(43) Date de publication de la demande: 28.03.2018
(73) Titulaire: Orange, 92130 Issy-les-Moulineaux (FR)
(72) Inventeur: COUREAU, Laurent, 91420 Morangis (FR); MELE, Jean-Marie, 75014 Paris (FR); LUCAS, Philippe, 91570 Bievres (FR)
(86) Numéro de dépôt international: PCT/FR2016/051158
(87) Numéro de publication internationale: WO 2016/185129

(56) Documents cités:
- EP-A1- 2 293 525
- EP-A1- 2 680 628
- US-A1- 2014 219 447
- "SCPTEC(13)000058r1_eUICC_Profile_Provisio ning_Procedure", ETSI DRAFT; SCPTEC(13)000058R1_EUICC_PROFILE_PROVISION ING_PROCEDURE, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP, 4 juin 2013 (2013-06-04), pages 1-6, XP014155592,

## Description

La présente invention concerne le domaine des télécommunications mobiles, et plus particulièrement celui des équipements mobiles dans lesquels est intégré un module d'identification de souscripteur de type carte SIM embarquée.

Depuis les premières générations de téléphones mobiles jusqu'à nos jours, il est habituel pour un utilisateur d'avoir à insérer une puce, dite carte SIM, dans son téléphone mobile. Cette carte SIM est fournie physiquement à l'utilisateur par l'opérateur d'un réseau de télécommunications mobiles auquel il s'abonne. Lorsqu'elle est fournie à l'utilisateur, cette carte SIM contient déjà en mémoire un profil d'abonnement comprenant des éléments permettant à cet utilisateur de s'authentifier auprès de ce réseau afin d'accéder aux services qu'il propose, en fonction de l'abonnement souscrit. Ainsi, grâce à la séparation physique entre d'une part le téléphone mobile et d'autre part la carte SIM, l'utilisateur peut facilement changer de terminal tout en conservant sa carte SIM, et ainsi rester chez le même opérateur, ou inversement changer d'opérateur, et donc de carte SIM, tout en conservant son terminal.

Depuis quelques années cependant, il existe de plus en plus de terminaux mobiles (que ce soit des téléphones ou des tablettes) dans lequel la carte SIM est intégrée (c'est-à-dire non séparable physiquement du terminal), on parle alors de carte SIM embarquée. Dans ce cas de figure, le terminal mobile peut être acheté dans un premier temps par l'utilisateur, par exemple en se déplaçant physiquement dans un point de vente d'un distributeur de ce type de terminal, sans qu'un quelconque profil d'abonnement ne soit chargé nativement dans la carte SIM embarquée de ce terminal, et donc sans que l'utilisateur puisse accéder directement à un réseau mobile suite à l'achat de ce terminal.

Lorsque l'utilisateur souhaite ultérieurement activer un abonnement, pour pouvoir accéder à un réseau mobile et ainsi utiliser son terminal en mobilité, la manipulation peut alors s'avérer peu ergonomique pour l'utilisateur.

L'utilisateur peut ainsi avoir à se déplacer à nouveau, cette fois-ci dans une agence d'un opérateur de réseau mobile de son choix, pour obtenir un profil d'abonnement à charger dans sa carte SIM embarquée. Alternativement, le distributeur ou le fabriquant du terminal peut proposer sur son site internet une liste d'opérateurs téléphoniques auprès desquels souscrire un abonnement, l'utilisateur étant alors renvoyé vers le site internet de l'opérateur qu'il sélectionne pour pouvoir y souscrire un abonnement spécifique lui permettant d'obtenir un profil d'abonnement correspondant à télécharger ensuite.

Outre que ces solutions entraînent une multiplication des démarches de l'utilisateur avant de pouvoir bénéficier des fonctionnalités de son terminal en mobilité, elles sont lourdes à gérer aussi bien pour le distributeur de terminal, qui doit alors maintenir à jour sur son portail internet des listes d'opérateurs mobiles variables dans le temps et exponentiellement croissantes (si l'on compte par exemple tous les opérateurs mobiles virtuels existants, et ce dans chaque pays couvert), que pour les opérateurs mobiles qui doivent alors se mettre en relation avec les multiples distributeurs de tels terminaux pour être proposés aux acheteurs de ces terminaux.

Le document « eUICC Profile Provisionning Procédure » de la société Samsung, ETSI, du 4 juin 2013 (XP014155592) présente un système de provisionnement de profil pour terminal mobile avec module eUICC, reposant sur un serveur de résolution d'adresse, dans lequel pour chaque terminal mobile muni d'une carte UICC vendue, l'identifiant de cette eUICC est transmis en association avec l'adresse d'un serveur SM-SR au serveur de résolution d'adresse, afin d'y stocker cette association en vue de permettre la récupération ultérieure de cette adresse par le terminal mobile, au moyen de l'identifiant d'eUICC.

La demande EP 2 680 628 A1 concerne également un système de provisionnement à distance de carte type eUICC, dans lequel le terminal mobile transmet une requête de provisionnement à un serveur de certification, lequel peut ensuite, sous réserve que le terminal mobile soit correctement authentifié, rediriger ce terminal mobile vers un serveur de provisionnement à partir duquel télécharger le profil requis.

Enfin, la demande EP 2 293 525 A1 divulgue un procédé permettant à un dispositif sécurisé de résoudre l'adresse IP d'un serveur cible, au moyen éventuellement d'un serveur DNS distant si un module client DNS embarqué ne parvient pas à le faire, sans que ce serveur cible ne soit un serveur de provisionnement de profil.

La présente invention a pour objet de remédier aux inconvénients précités des solutions existantes en matière d'initialisation de terminaux mobiles avec cartes SIM embarquées. Elle est définie par les revendications indépendantes.

Elle propose à cet effet un procédé d'installation d'un profil d'abonnement, souscrit auprès d'un opérateur d'un réseau mobile de télécommunications, sur un terminal mobile contenant un module embarqué d'identification de souscripteur, comprenant le chargement du profil d'abonnement dans le module embarqué depuis un serveur de provisionnement du réseau mobile de télécommunications. Ce procédé comprend en outre, avant le chargement du profil, l'émission d'une requête de résolution de nom vers un serveur de noms de domaine, cette requête comprenant un identifiant d'un équipement réseau permettant le déclenchement du chargement du profil, la réception, en réponse à cette requête, d'un message de réponse contenant une adresse réseau de l'équipement réseau et l'émission d'une requête vers ledit équipement réseau au moyen de cette adresse réseau afin permettre le déclenchement du chargement du profil.

Il est ainsi possible d'automatiser la découverte de la plateforme de provisionnement où se trouve le profil d'abonnement à charger dans un module embarqué d'identification de souscripteur, et donc d'éviter des démarches inutiles aux clients, ainsi qu'un échange d'informations complexe à gérer entre opérateurs et distributeurs de terminaux avec ce type de module embarqué. L'installation du profil opérateur d'un abonné dans un module embarqué de son terminal s'en trouve facilitée. Cette automatisation est en outre simple d'implémentation car elle repose notamment sur une réutilisation astucieuse d'un équipement (un serveur de noms de domaine) et un mécanisme (la résolution de nom au moyen d'un tel serveur) déjà existants et largement déployés, mais utilisés dans un contexte totalement différent. En outre, la réutilisation de ce type d'équipement et de mécanisme permet de tirer parti des mécanismes sécurisés (« Secure DNS ») inhérents à ceux-ci dans le contexte du chargement de profils d'abonnements.

Dans un mode de réalisation, l'équipement réseau permettant le déclenchement du chargement du profil est le serveur de provisionnement et la requête émise vers l'équipement réseau est une requête de déclenchement du chargement du profil contenant un identifiant du module embarqué et/ou du terminal mobile. Cette implémentation permet une découverte directe de la plateforme de provisionnement où se trouve le profil à charger et offre ainsi une automatisation efficace et simple à mettre en oeuvre, particulièrement adaptée au cas où le terminal mobile avec module embarqué est obtenu directement auprès de l'opérateur.

Selon une caractéristique avantageuse de ce mode de réalisation, le procédé comprend en outre la réception, depuis le module embarqué, d'un identifiant dudit module embarqué, l'identifiant du serveur de provisionnement étant construit à partir d'au moins une partie de l'identifiant dudit module embarqué.

Un degré d'automatisation supplémentaire peut ainsi être offert, le serveur de provisionnement pouvant être découvert sans que l'abonné ait besoin de renseigner l'intégralité de son identifiant dans son terminal. Ceci permet également d'assurer la confidentialité de l'identifiant dudit module embarqué lorsque seulement une partie de ce dernier est utilisé pour obtenir l'identifiant du serveur de provisionnement.

Selon une autre caractéristique avantageuse de ce mode de réalisation où l'identifiant du serveur de provisionnement inclut un mot de passe à usage unique, le procédé comprend en outre la vérification de ce mot de passe à usage unique par le serveur de noms de domaine et/ou le serveur de provisionnement.

L'automatisation de l'installation du profil peut ainsi être sécurisée, et on s'assure ainsi qu'un profil non désiré par l'abonné ne soit pas chargé sur le module embarqué de son terminal.

Dans un autre mode de réalisation où l'équipement réseau permettant le déclenchement du chargement du profil est un serveur de découverte distinct du serveur de provisionnement et la requête émise vers cet équipement réseau est une requête d'obtention d'une information permettant d'envoyer une requête de déclenchement du chargement du profil au serveur de provisionnement, le procédé comprend en outre laréception depuis le serveur de découverte, en réponse à la requête d'obtention, d'un message de réponse contenant cette information et l'émission d'une requête de déclenchement du chargement du profil au serveur de provisionnement.

Cette autre implémentation permet une découverte indirecte du serveur de provisionnement où se trouve le profil à charger, par l'intermédiaire d'un serveur de découverte capable de renvoyer le terminal mobile vers différentes plateformes de provisionnement en fonction de l'opérateur auprès duquel est souscrit un abonnement. Ceci offre une automatisation plus flexible et appropriée à un contexte multi-opérateurs, particulièrement adaptée au cas où le terminal mobile avec module embarqué n'a pas été obtenu directement d'un opérateur spécifique.

Selon une caractéristique avantageuse de ce mode de réalisation, le serveur de découverte est un serveur de noms de domaine, la requête d'obtention d'une information permettant d'envoyer une requête de déclenchement du chargement du profil au serveur de provisionnement est une requête de résolution de nom contenant un identifiant du serveur de provisionnement et l'information est une adresse réseau du serveur de provisionnement, la requête de déclenchement du chargement du profil étant émise au moyen de ladite adresse réseau.

Ceci permet une automatisation simple de l'installation d'un profil dans un contexte multi-opérateurs en réutilisant astucieusement, pour implémenter le serveur intermédiaire de découverte, un équipement (un serveur de noms de domaine) et un mécanisme (la résolution de nom au moyen d'un tel serveur) déjà existants mais utilisés dans un contexte totalement différent.

Selon une autre caractéristique avantageuse de ce mode de réalisation où la requête d'obtention d'une information contient un identifiant du module embarqué et ladite information est un identifiant du serveur de provisionnement, le procédé comprend en outre l'émission, vers le serveur de noms de domaine, d'une requête de résolution de nom de domaine contenant l'identifiant du serveur de provisionnement et la réception, en réponse à ladite requête de résolution, d'un message de réponse contenant l'adresse réseau du serveur de provisionnement, la requête de déclenchement du chargement du profil étant émise au moyen de l'adresse réseau.

Ceci permet une automatisation de l'installation d'un profil dans un contexte multi-opérateurs au moyen d'un serveur intermédiaire de découverte générique, qui n'est pas spécifiquement de type serveur DNS, la fonction de résolution des adresses des différents équipements réseaux impliqués étant alors maintenue au niveau d'un serveur de noms de domaine.

Un autre objet de l'invention concerne un terminal mobile comprenant un module embarqué d'identification de souscripteur et un module de traitement apte à installer un profil d'abonnement, souscrit auprès d'un opérateur d'un réseau mobile de télécommunications, dans le module embarqué. Le module de traitement est configuré pour transmettre une requête de résolution de nom de domaine comprenant un identifiant d'un serveur réseau permettant le déclenchement du chargement du profil, destinée à être transmise vers un serveur de noms de domaine et, suite à la réception d'un message de réponse à cette requête de résolution contenant une adresse réseau d'un équipement réseau permettant le déclenchement du chargement du profil, transmettre une requête à cet équipement réseau afin de déclencher le chargement du profil d'abonnement depuis un serveur de provisionnement.

Un autre objet de l'invention concerne un serveur de noms de domaine comprenant un module de mémorisation dans lequel des adresses réseaux d'équipements peuvent être mémorisées en association avec des noms de domaine et un module de traitement apte à consulter ce module de mémorisation, ce module de traitement étant configuré pour, suite à la réception d'une requête de résolution de nom de domaine contenant un identifiant d'un équipement réseau permettant le déclenchement du chargement du profil, transmise depuis un terminal mobile contenant un module embarqué d'identification de souscripteur :
vérifier si une adresse réseau correspondant audit identifiant est stockée dans le module de mémorisation ; et
lorsque cette vérification est positive, transmettre ladite adresse réseau au terminal mobile afin de permettre audit terminal de transmettre audit équipement de réseau une requête permettant le chargement d'un profil d'abonnement depuis un serveur de provisionnement.

Un autre objet de l'invention concerne un serveur de découverte comprenant un module de mémorisation et un module de traitement apte à consulter ce module de mémorisation le module de traitement étant configuré pour, suite à la réception d'une requête en obtention d'une information permettant d'envoyer une requête de déclenchement du chargement d'un profil d'abonnement à un serveur de provisionnement, transmise depuis un terminal mobile contenant un module embarqué d'identification de souscripteur :
vérifier si cette information est mémorisée dans le module de mémorisation ; et
lorsque cette vérification est positive, transmettre cette information au terminal mobile afin de permettre audit terminal de transmettre à l'équipement de réseau une requête de chargement du profil d'abonnement depuis le serveur de provisionnement.

Un autre objet de l'invention concerne un serveur de provisionnement comprenant un module de mémorisation et un module de traitement apte à consulter ce module de mémorisation, le module de traitement étant configuré pour, suite à la réception d'une requête de chargement d'un profil d'abonnement transmise depuis un terminal mobile comprenant un module embarqué d'identification de souscripteur, cette requête contenant un identifiant du module embarqué et/ou du terminal :
vérifier, au moyen de l'identifiant, si une indication qu'un profil d'abonnement est disponible au chargement pour ledit module embarqué est stockée dans le module de mémorisation ; et
lorsque cette vérification est positive, transmettre le profil d'abonnement au terminal mobile.

Un autre objet de l'invention concerne un programme d'ordinateur comportant des instructions de code pour la mise en oeuvre d'au moins une des étapes du ci-avant, lorsque ce programme est exécuté par un processeur d'un terminal mobile ou d'un serveur. Un autre objet de l'invention concerne également un support d'enregistrement, lisible par un terminal mobile ou un serveur, dans lequel est enregistré le ci-avant.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
- la figure 1 est un schéma synoptique illustrant un système de télécommunications mobile permettant l'installation, dans un module embarqué d'un terminal mobile, d'un profil d'abonnement auprès d'un opérateur de télécommunications ;
- les figures 2 à 5 illustre les étapes d'un procédé d'installation de profil d'abonnement selon différents modes de réalisation de l'invention ;
- la figure 6 illustre un terminal mobile selon un mode de réalisation de l'invention ;
- la figure 7 illustre un équipement réseau, de type serveur de provisionnement, selon un mode de réalisation de l'invention ; et
- la figure 8 illustre un équipement réseau, de type serveur de noms de domaine ou serveur de découverte, selon un mode de réalisation de l'invention.

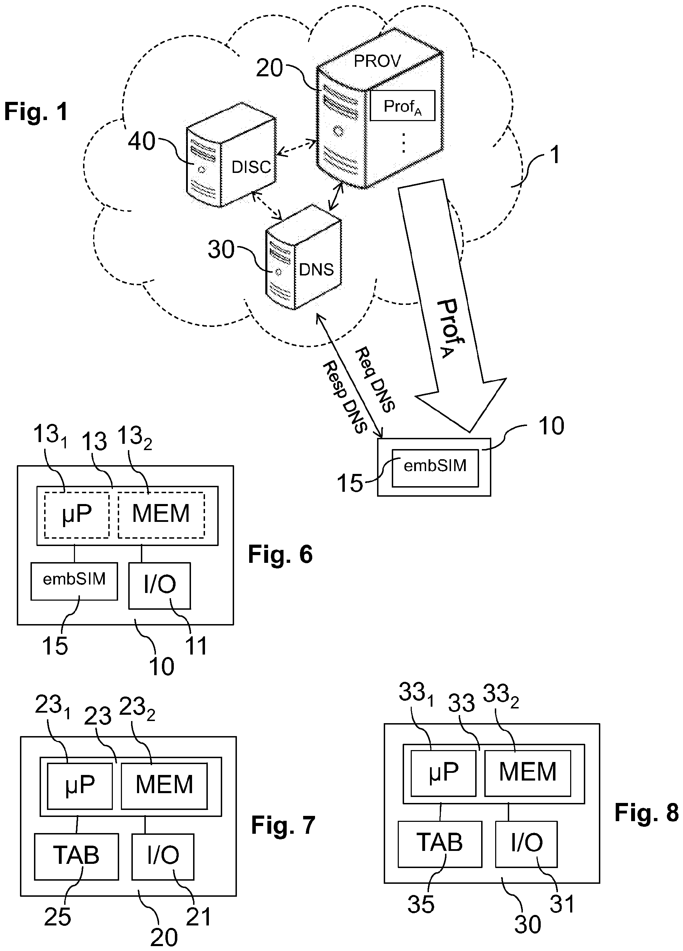

On se réfère tout d'abord à la **figure 1** sur laquelle est illustré un système de télécommunications mobile permettant l'installation, dans un module embarqué d'un terminal mobile, d'un profil d'abonnement auprès d'un opérateur de télécommunications.

Ce système comporte, d'une part, un terminal mobile 10 (pouvant être aussi bien un téléphone mobile, un smartphone, une tablette qu'un ordinateur portable, à titre d'exemple) comprenant en particulier un module 15 d'identification de souscripteur embarqué (typiquement formé par une puce contenant un microcontrôleur associé à une mémoire) intégré dans le terminal 10 et destiné à stocker des informations relatives à un abonné A d'un réseau mobile, telles que les identifiants de cet abonné A (par exemple son numéro IMSI) et de l'opérateur de télécommunications mobiles OP auquel il a souscrit (par exemple les numéros MCC et MNC de l'opérateur OP). Un tel module embarqué 15, non séparable du terminal 10 au contraire d'une carte SIM classique, est désigné habituellement par les termes « embedded SIM » ou « eUICC ».

Le système comporte, d'autre part, un réseau de communication 1 comprenant un certain nombre d'équipements réseaux 20,30,40 permettant le chargement, dans le module embarqué 15 intégré dans le terminal 10, d'un profil d'abonnement souscrit par l'abonné A auprès de son opérateur mobile OP. Ces différents équipements réseaux 20,30,40 peuvent appartenir à un même réseau de communication, entièrement géré par un même opérateur OP, ou être situés dans différents réseaux de communication gérés par différents opérateurs, constituant alors le réseau 1 illustré sur la figure 1.

En particulier, le système comporte d'une part un premier équipement réseau 20 servant à provisionner des profils d'abonnements, typiquement implémenté sous la forme d'un serveur, dans lequel sont stockés les profils d'abonnement des abonnés à un même opérateur. Le profil d'abonnement Prof_{A} prend la forme d'un fichier numérique pouvant comporter notamment les éléments d'authentification de l'abonné vis à avis de l'opérateur OP (clé(s) secrète(s) associée(s) à cet abonnement spécifique), le(s) identifiant(s) de l'abonné (par exemple IMSI), ainsi que les services auxquels l'abonné A a souscrit auprès de l'opérateur OP ou auprès d'un fournisseur de services tiers. Le terminal 10 peut télécharger le profil Prof_{A} depuis ce serveur de provisionnement 20, en émettant une requête à cet effet à destination de l'adresse réseau de ce serveur 20.

Il comporte également un deuxième équipement réseau 30, typiquement implémenté sous la forme d'un serveur, pouvant être interrogé dans un premier temps par le terminal 10 pour obtenir des informations lui permettant d'accéder dans un second temps, directement ou indirectement selon le mode de réalisation utilisé, au serveur 20 de provisionnement afin de déclencher le chargement du profil d'abonnement dans le module embarqué 15.

Ce serveur 30 est en particulier un serveur dit « serveur de noms de domaine », ou encore serveur DNS, stockant une table d'adresses réseaux (typiquement des adresses IP) associées respectivement à des noms de domaine, de sorte à ce que lorsque ce serveur 30 reçoit depuis le terminal 10 une requête en résolution de nom de domaine identifiant un nom de domaine particulier, ce serveur 30 recherche dans sa table une adresse réseau associée à ce nom de domaine et retourne au terminal 10 une réponse contenant cette adresse réseau si elle existe dans cette table.

Le système peut également comporter de manière optionnelle un troisième équipement réseau 40 servant à découvrir le serveur de provisionnement 20, typiquement implémenté sous la forme d'un serveur, un tel serveur de découverte 40 pouvant être utilisé dans le présent contexte pour accéder au serveur 20 de provisionnement, comme il sera vu plus loin.

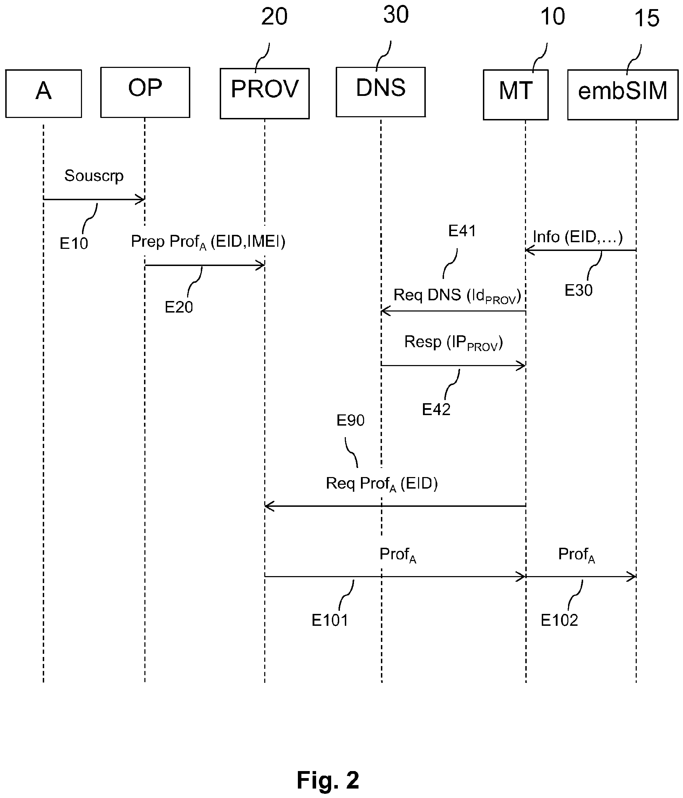

On se réfère à présent à la **figure 2** sur laquelle est illustrée un procédé d'installation de profil d'abonnement selon un premier mode de réalisation de l'invention.

Dans ce procédé, un utilisateur A souscrit (étape E10) au préalable un abonnement auprès d'un opérateur mobile OP, afin de lui permettre d'accéder à des services offerts par cet opérateur au moyen de son terminal mobile 10, par exemple physiquement en se déplaçant dans une agence, ou à distance via un portail web accédé depuis un ordinateur ou un autre terminal de communication. Au cours de cette procédure de souscription, des informations liées au module embarqué 15 et au terminal 10 sont échangées avec l'opérateur OP, telles qu'un identifiant du module embarqué 15 (un numéro unique de série, e.g. son identifiant EID) et un identifiant du terminal 10 (un numéro unique de série, e.g. son identifiant IMEI).

L'opérateur OP envoie ensuite (étape E20) une requête au serveur de provisionnement 20 lui instruisant de préparer le profil d'abonnement Prof_{A} associé à l'abonné A, en fonction des services souscrits par cet abonné A, cette requête pouvant comprendre les identifiants du module embarqué 15 (e.g. EID), du terminal 10 (e.g. IMEI) ou de l'abonné A (e.g. IMSI), voire n'importe quelle combinaison de ces identifiants, afin notamment de permettre à l'opérateur OP d'associer le profil d'abonnement Prof_{A} préparé spécifiquement pour le module embarqué 15 avec l'abonné A en particulier. La fourniture de l'identifiant du module embarqué 15 (e.g. EID) permet de préparer le profil d'abonnement pour un module embarqué 15 dédié, et ainsi d'éviter le « cloning » de ce profil.

Une fois le fichier du profil d'abonnement Prof_{A} mis à jour et préparé par le serveur 20, il est mémorisé par ce serveur 20 et ainsi prêt à être téléchargé dans le module embarqué 15. Une table de profil d'abonnements peut être mise à jour à ce stade dans ce serveur 20, indiquant la disponibilité de ce profil Prof_{A} au chargement en association avec l'identifiant reçu dans la requête.

Par la suite, suite à un événement déclencheur du côté du terminal 10, par exemple lorsque l'abonné A initialise son terminal 10 ou, dans le cas où ce terminal 10 a déjà été initialisé, lors d'un processus de vérification automatique lancé par le terminal 10, ou encore sur une demande initiée par l'abonné A lui-même sur son terminal 10, le terminal 10 va contacter le serveur 30 de noms de domaine pour pouvoir accéder au serveur 20 de provisionnement.

Pour ce faire, de manière optionnelle, le module embarqué 15 peut au préalable transmettre (étape E30) au terminal 10 son identifiant EID, afin que le terminal 10 utilise cet identifiant lors de ses échanges avec les serveurs 20 et 30.

Le terminal 10 ne connaît pas à ce stade l'adresse réseau du serveur 20 de provisionnement mais il connaît l'adresse réseau IP_{DNS} du serveur 30 de résolution de nom de domaine, cette adresse ayant été configurée préalablement dans le terminal 10 afin de lui permettre de résoudre toute sorte de noms de domaine (par exemple lors d'une navigation sur internet).

Le terminal 10 utilise alors cette adresse IP_{DNS} pour transmettre (étape E41) à ce serveur 30 une requête en résolution de nom, typiquement au format d'une requête DNS, cette requête contenant en particulier un identifiant d'un équipement réseau utilisable pour déclencher le chargement du profil, en l'occurrence l'identifiant Id_{PROV} du serveur 20 de provisionnement lui-même dans le présent mode de réalisation.

A titre d'exemple, cet identifiant ID_{PROV} peut prendre la forme d'un nom au format DNS du type *provisioning.platform.domain.tld* où :
- « *provisioningplatform* » est un identifiant du sous-domaine du réseau dans lequel se trouve le serveur de provisionnement ;
- *« domain* » est un identifiant (e.g. le nom) du domaine déposé du réseau dans lequel se trouve le serveur de provisionnement ;
- « *ltd*» est un identifiant (e.g. le nom) du domaine générique sur lequel réside le serveur de provisionnement ;

L'identifiant du serveur 20 peut être renseigné dans le terminal 10 par l'abonné A lui-même, s'il le connaît dans son intégralité. Alternativement, l'abonné A peut se contenter de renseigner une partie de cet identifiant qu'il connaît, ou alors renseigner un code identifiant l'opérateur mobile OP auquel il a souscrit (qui peut être le nom de cet opérateur), le terminal 10 pouvant alors utiliser cette information, et éventuellement la compléter automatiquement, pour obtenir l'identifiant complet du serveur 20 et l'insérer dans la requête en résolution de nom.

Alternativement, l'identifiant du serveur 20 peut être obtenu à partir de l'identifiant du module embarqué 15, lorsque celui-ci a été préalablement transmis du module 15 au terminal 10 (étape E30).

Ainsi, lorsque cet identifiant se présente sous la forme d'un identifiant EID, cet identifiant EID comporte notamment des identifiants du pays de fabrication et du constructeur du module embarqué, un numéro associé au serveur 20 de provisionnement, ainsi qu'un numéro de série. Parmi ces informations, les identifiants du pays de fabrication et du constructeur, ainsi que le numéro associé au serveur 20, peuvent être utilisés par le terminal 10 pour construire l'identifiant du serveur 20 à résoudre par le serveur 30. Ainsi, à titre d'exemple, lorsque l'identifiant EID contient la séquence `033001006' pour indiquer que le module embarqué 15 a été fabriqué en France (`033'), par un constructeur identifié par la séquence '001', et qu'un serveur de provisionnement associé a le numéro '006', ces informations peuvent être insérées dans l'identifiant du serveur 20 transmis au serveur 30. Le nombre limité d'informations extraites au sein de l'identifiant EID, pour construire l'identifiant du serveur 20, permet d'assurer la confidentialité de cet identifiant EID dans le réseau.

Suite à la réception de cette requête, le serveur 30 recherche une adresse réseau correspondant à cet identifiant et, s'il en trouve une stockée dans sa table d'adresses réseaux, transmet (étape E42) cette adresse réseau IP_{PROV} au terminal 10 dans un message de réponse.

Suite à la réception de cette réponse, le terminal 10 extrait de cette réponse l'adresse réseau IP_{PROV} du serveur 20 de provisionnement et utilise alors cette adresse réseau IP_{PROV} pour transmettre (étape E90) à ce serveur 20 une requête en déclenchement du chargement du profil Prof_{A}, cette requête contenant un identifiant du module embarqué 15 (e.g. son EID) lorsqu'il a été fourni au terminal mobile 10, pouvant éventuellement être complété par un identifiant du terminal 10 (e.g. son IMEI).

La transmission (étape E90) de cette requête contenant un identifiant du module embarqué 15 peut avantageusement se faire au travers d'un lien sécurisé (e.g. un canal chiffré permettant de protéger cet identifiant qui constitue une information sensible) entre le serveur 20 de provisionnement et le terminal 10 une fois que ce dernier dispose de l'adresse réseau du serveur 20, avant cette transmission. Le lien sécurisé peut être établi selon le protocole TSUSSL. Cette requête est alors transmise via ce lien sécurisé, ce qui permet de vérifier de manière sure l'authenticité du module embarqué 15.

Le serveur 20 vérifie ensuite si un fichier du profil d'abonnement Prof_{A} est en attente de chargement, en consultant une table mémorisant les profils disponibles associés à des identifiants de type EID . Si le serveur 20 détecte un profil disponible correspondant à l'identifiant reçu du terminal, il récupère le profil Prof_{A} de l'abonné A parmi les profils d'abonnement dont il dispose, et transmet (étape E101) ce profil Prof_{A} (sous la forme d'un fichier numérique) au terminal 10 en retour. Ce profil Prof A est ensuite chargé, puis installé, par le terminal 10 dans le module embarqué 15 (étape E102).

Si, par contre, le serveur 20 ne détecte aucun profil Prof_{A} en attente de chargement correspondant à l'identifiant EID reçu, ce serveur 20 peut retourner au terminal 10 une requête en redirection vers un portail internet permettant à l'utilisateur A du terminal 10 de sélectionner une offre de l'opérateur OP. Une fois les paramètres de l'offre choisis par l'utilisateur A, le serveur 20 transmet le profil Prof_{A} correspondant au terminal 10, afin que ce soit profil soit chargé et installé dans le module embarqué 15.

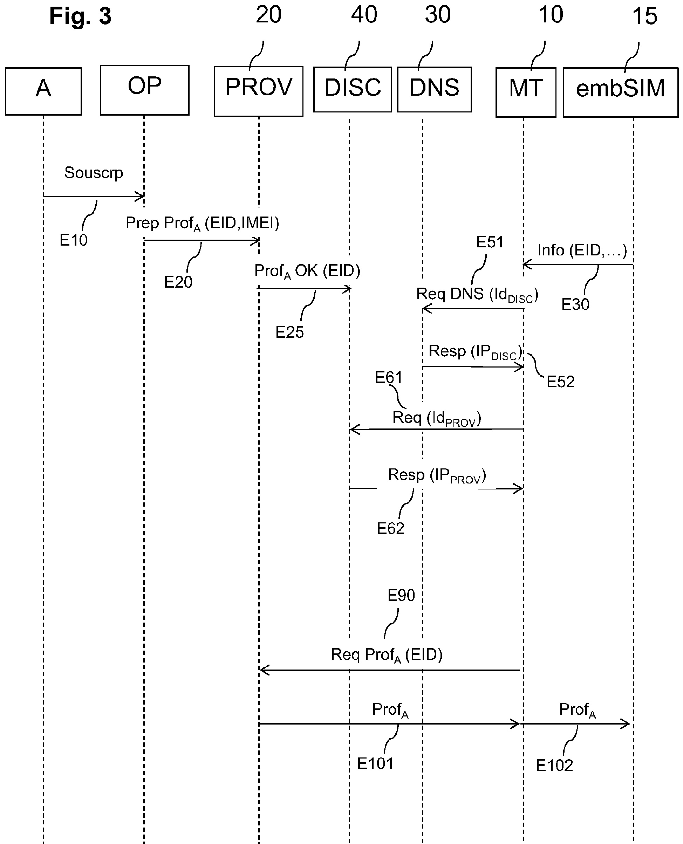

On se réfère à présent à la **figure 3** sur laquelle est illustré un procédé d'installation de profil d'abonnement selon un deuxième mode de réalisation de l'invention.

Ici, contrairement au mode de réalisation précédent, la procédure d'accès du terminal 10 au serveur 20 de provisionnement se fait indirectement, via un serveur 40 de découverte distinct du serveur 20 de provisionnement. A l'instar du serveur 30, ce serveur 40 peut être implémenté sous la forme d'un serveur de noms de domaine, dit serveur DNS, dont la fonction principale est de retourner une adresse réseau d'un équipement réseau sur réception d'une requête de résolution de nom désignant cet équipement au moyen d'un identifiant (e.g. un nom DNS).

Dans ce mode de réalisation, le procédé démarre par la souscription préalable de l'utilisateur A à un abonnement auprès de l'opérateur OP, ainsi que la préparation du profil d'abonnement Prof_{A} de l'abonné A par le serveur 20, similairement aux modes de réalisation précédents (étapes E10,E20).

Une fois le profil Prof_{A} préparé par le serveur 20, ce serveur 20 transmet (étape E25) au serveur 40 de découverte un message signalant qu'un profil d'abonnement correspondant au module embarqué identifié par son identifiant (e.g. son numéro EID), et éventuellement avec également le nom de l'opérateur de télécommunications OP associé est disponible au téléchargement dans le serveur 20.

Ce message peut contenir un identifiant générique se contentant d'identifier le serveur 20 sans identifier le module embarqué 15 concerné par l'abonnement pour lequel le profil a été préparé, ou bien un identifiant plus spécifique (e.g. EID) désignant le module embarqué 15 pour lequel ce profil Prof A a été préparé. Le serveur 40 peut alors stocker un tel identifiant comme indication qu'un profil d'abonnement est en attente de chargement, en association avec l'adresse réseau IP_{PROV} du serveur 20 et un identifiant Id_{PROV} de ce serveur 20. La table mémorisée dans le serveur 40 de découverte peut alors prendre la forme suivante, à titre d'exemple illustrant différents cas possibles non limitatifs :

**Table 1**

| Serveur de provisionnement (PROV) | Identifiant de serveur de provisionnement (Id_{PROV}) | Adresse réseau du serveur (IP_{PROV}) | Profil d'abonnement en attente de chargement |
|---|---|---|---|
| PROV1 | Id_{PROV1} | 10.XXX.XX.001 | OK |
| | | | |
| PROV2 | Id_{PROV2} | | EID1 |
| | | | EID2 |
| | | | EID2 |
| | | | |
| PROV3 | Id_{PROV3} | 10.XXX.XX.003 | |

Cette table indique :
- la disponibilité d'un nombre indéterminé (au moins égal à un) de profil(s) d'abonnement en attente de chargement sur le serveur de provisionnement PROV1, au moyen d'un indicateur générique ('OK'), l'adresse réseau IP_{PROV} de ce premier serveur étant connue du serveur 40 et pouvant ainsi être retournée sur requête au terminal.
- la disponibilité d'un nombre déterminé (ici trois) de profils d'abonnement en attente de chargement sur le serveur de provisionnement PROV2, pour des modules embarqués identifiés par les identifiants EID1,EID2,EID3, l'adresse réseau IP_{PROV} de ce deuxième serveur PROV2 n'étant pas connue du serveur 40.
- la non-disponibilité d'un quelconque profil d'abonnement en attente de chargement sur le serveur de provisionnement PROV3, indiquée au moyen d'un indicateur générique (champ vide en l'occurrence), soit parce qu'aucun profil d'abonnement prêt n'a été signalé au serveur 40 par le serveur de provisionnement PROV3 à ce stade, soit parce qu'un profil d'abonnement prêt antérieurement a déjà été chargé dans le module embarqué 15 (le champ correspondant dans la table 1 ayant alors été effacé pour signaler ce chargement effectué).

Cette table peut aussi se réduire à une simple liste associant respectivement des identifiants de module embarqués (e.g. EID) pour lesquels un profil d'abonnement est en attente de chargement avec des identifiants de serveurs de provisionnement (ID_{PROV}) sur lesquels sont stockés ces profils.

Par la suite, suite à un événement déclencheur du côté du terminal 10, du type de ceux décrits précédemment, le terminal 10 va contacter le serveur 30 de noms de domaine pour pouvoir s'adresser au serveur 40 de découverte, lequel va lui permettre d'accéder ensuite au serveur 20 de provisionnement.

Pour ce faire, de manière optionnelle, le module embarqué 15 peut transmettre (étape E30) au préalable au terminal 10 son identifiant EID, afin que le terminal 10 utilise cet identifiant lors de ses échanges avec le serveur 30.

Le terminal 10 utilise l'adresse IP_{DNS} (configurée préalablement dans le terminal 10) pour transmettre (étape E51) à ce serveur 30 une requête en résolution de nom de domaine, typiquement au format d'une requête DNS, cette requête contenant en particulier un identifiant d'un serveur du réseau utilisable pour déclencher le chargement du profil, en l'occurrence l'identifiant Id_{DISC} du serveur 40 de de découverte dans le présent mode de réalisation.

A titre d'exemple, cet identifiant Id_{DISC} peut ici prendre la forme d'un nom au format DNS du type *discoverygateway.domain.tld* où :
- « *discoverygateway* » est un identifiant du sous-domaine du réseau 1 dans lequel se trouve le serveur 40 de découverte ;
- *« domain* » est un identifiant (e.g. le nom) du domaine déposé du réseau 1 dans lequel se trouve le serveur 40 de découverte ;
- « *ltd*» est un identifiant (e.g. le nom) du domaine générique sur lequel réside le serveur 40 de découverte ;

Similairement au mode de réalisation précédent, l'identifiant Id_{DISC} du serveur 40 peut être renseigné dans le terminal 10 par l'abonné A lui-même, s'il le connaît dans son intégralité. Alternativement, l'abonné A peut se contenter de renseigner une partie de cet identifiant qu'il connaîtrait, ou alors simplement renseigner un code identifiant l'opérateur mobile OP auquel il a souscrit (voire le nom de cet opérateur), le terminal 10 pouvant alors utiliser cette information, et éventuellement la compléter automatiquement, pour obtenir l'identifiant complet du serveur 40.

L'identifiant du serveur 40 peut être obtenu à partir de l'identifiant du module embarqué 15, lorsque celui-ci a été préalablement transmis du module 15 au terminal 10 (étape optionnelle E30). Ainsi, lorsque cet identifiant se présente sous la forme d'un identifiant EID, cet identifiant EID peut inclure une séquence (par exemple `033001006') comportant des identifiants du pays de fabrication ('033') et du constructeur (`001') du module embarqué, ainsi qu'un numéro ('006') correspondant au serveur 40 de découverte, qui peuvent être utilisés par le terminal 10 pour construire l'identifiant du serveur 40 à résoudre au moyen du serveur 30, sans avoir à divulguer l'ensemble de l'EID au réseau 1.

Suite à la réception de cette requête, le serveur DNS 30 recherche une adresse réseau correspondant à cet identifiant Id_{DISC} et, s'il en trouve une stockée dans sa table d'adresses, transmet (étape E52) cette adresse réseau IP_{DISC} au terminal 10 dans un message de réponse.

Suite à la réception de cette réponse, le terminal 10 extrait de la réponse l'adresse réseau IP_{DISC} du serveur 40 de découverte et utilise alors cette adresse IP_{DISC} pour transmettre (étape E61) à ce serveur 40 une requête obtention d'une information permettant d'envoyer une requête de déclenchement du chargement du profil au serveur de provisionnement.

Dans le présent mode de réalisation, le serveur 40 de découverte est lui-même un serveur DNS et cette requête peut prendre la forme d'une requête DNS de résolution de nom contenant un identifiant Id_{PROV} du serveur 20 de provisionnement visé en particulier par le terminal 10.

Le serveur 40 de découverte, recevant cette requête émise par le terminal 10, vérifie alors dans une table de stockage telle qu'illustrée précédemment s'il existe un serveur de provisionnement associé avec une indication qu'un profil Prof_{A} est disponible au chargement dans ce serveur de provisionnement, par exemple lorsque l'identifiant Id_{PROV} reçu dans la requête est associé à une telle indication dans cette table (cf. exemple du serveur PROV1 dans la table 1).

Si ce n'est pas le cas (cf. exemple du serveur PROV3 dans la table 1), le serveur 40 de découverte transmet au terminal 10 un message de réponse indiquant qu'aucun profil d'abonnement n'est en attente de chargement, soit parce qu'il n'a pas encore été préparé, soit parce qu'il a déjà été chargé dans le module embarqué 15.

Si c'est le cas, le serveur 40 de découverte retourne (étape E62) au terminal 10 un message de réponse contenant une adresse réseau IP_{PROV}, associée dans la table du serveur 40 avec l'identifiant Id_{PROV} reçu du terminal, du serveur 40 dans lequel se trouve stocké le profil Prof_{A} prêt au chargement.

A ce stade, le terminal 10 dispose alors de l'adresse réseau IP_{PROV} du serveur 20 de provisionnement. Il peut utiliser cette adresse pour transmettre au serveur 20 une requête déclenchant le chargement du profil Prof_{A} de la manière décrite précédemment (étapes E90,E101,E102).

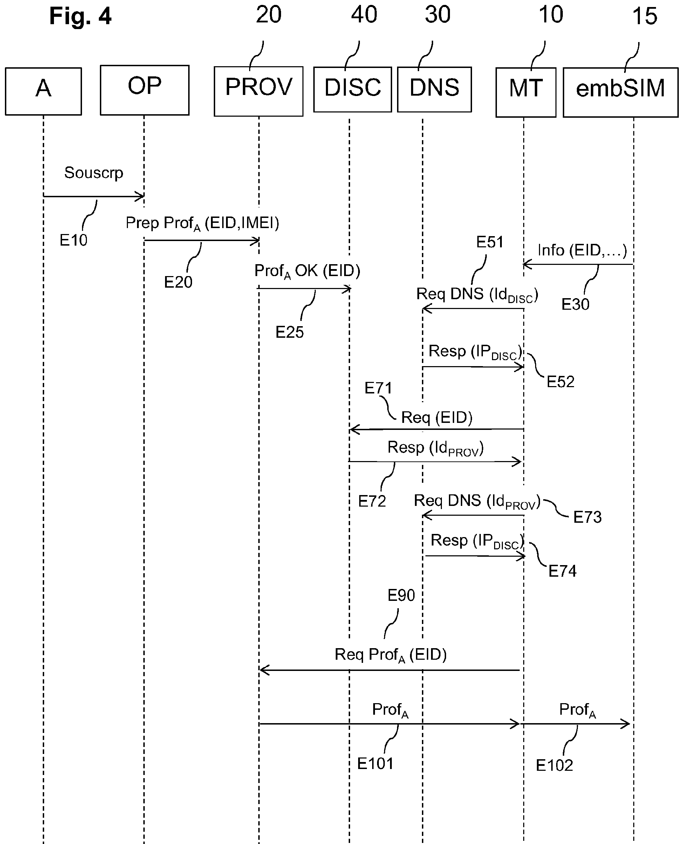

On se réfère à présent à la **figure 4** sur laquelle est illustré un procédé d'installation de profil d'abonnement selon un troisième mode de réalisation de l'invention.

Ce mode de réalisation est une alternative au précédent dans lequel le serveur de découverte n'est pas nécessairement un serveur DNS, et donc ne retourne pas directement l'adresse réseau IP_{PROV} du serveur 40 au terminal 10. Les étapes E10 à E52 sont ainsi similaires à celles illustrées sur la figure 3.

Par contre, une fois qu'il a obtenu l'adresse réseau IP_{DNS} , le terminal 10 transmet (étape E71) à ce serveur 40 une requête obtention d'une information permettant d'envoyer une requête de déclenchement du chargement du profil au serveur de provisionnement.

Cependant, cette requête n'est pas nécessairement une requête de résolution de nom. Elle contient un identifiant qui ne cible pas un serveur de provisionnement particulier, par exemple un identifiant associé au module embarqué 15 tel que son EID complet, ou une partie de cet identifiant EID pour assurer la confidentialité de cet EID dans le réseau. Cet identifiant permet au serveur 40 de découverte de vérifier dans une table de stockage telle qu'illustrée précédemment s'il existe un serveur de provisionnement associé avec une indication qu'un profil Prof_{A} est disponible au chargement dans ce serveur de provisionnement, par exemple lorsque l'identifiant EID ou sa partie reçue dans la requête correspond à un identifiant EID stocké dans cette table (cf. exemple du serveur PROV2 dans la table 1).

Lorsque c'est le cas, le serveur 40 de découverte retourne (étape E72) au terminal 10 un message de réponse contenant un identifiant ID_{PROV}, associé dans la table du serveur 40 avec l'identifiant EID reçu du terminal, du serveur 20 dans lequel se trouve stocké le profil Prof_{A} prêt au chargement.

Le terminal 10 peut alors extraire cet identifiant Id_{PROV} et l'insérer dans une nouvelle requête de résolution de nom transmise (étape E73) au serveur DNS 30 pour recevoir en retour (étape E74) l'adresse réseau IP_{PROV} du serveur 20, qu'il peut alors utiliser pour transmettre au serveur 20 une requête déclenchant le chargement du profil Prof_{A} de la manière décrite précédemment (étapes E90,E101,E102).

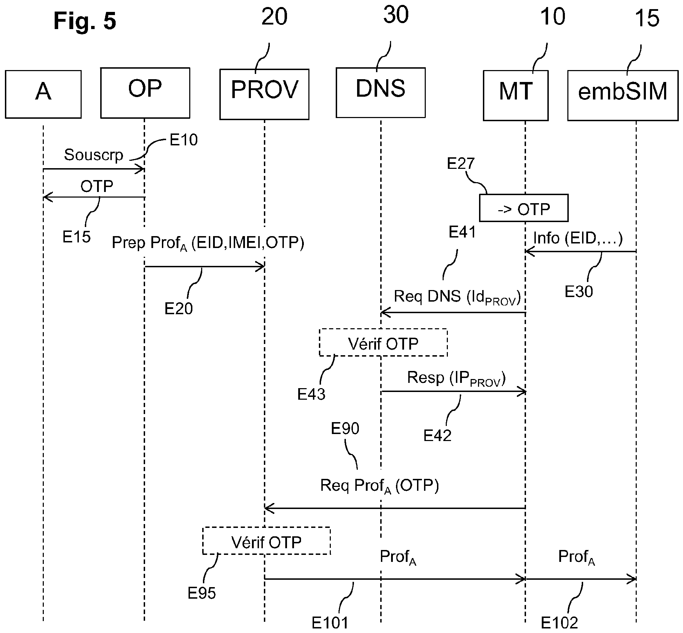

On se réfère à présent à la **figure 5** sur laquelle est illustrée un procédé d'installation de profil d'abonnement selon un quatrième mode de réalisation de l'invention.

Ce quatrième mode de réalisation se rapproche du premier mode de réalisation en ce qu'il n'utilise pas de serveur 40 de découverte. Il s'en distingue cependant par l'utilisation d'un code supplémentaire pour permettre le chargement du profil d'abonnement.

Ce code peut en particulier être un code temporaire à usage unique (« One Time Password » en anglais), désigné par OTP sur la figure 4, que l'abonné A fournit au terminal 10 pour lancer le processus de chargement.

Dans ce mode de réalisation, le procédé démarre toujours par une souscription préalable de l'utilisateur A à un abonnement auprès de l'opérateur OP. Cependant, à ce stade, l'opérateur OP fournit en outre un code OTP à l'abonné A (étape E15), soit au moyen d'une lettre envoyée à l'abonné A, soit au moyen d'un code barre pouvant être scanné par le terminal 10 de l'abonné A, par exemple.

L'opérateur OP envoie également une requête de préparation du profil d'abonnement de l'abonné A au serveur 20 afin de préparer le profil Prof_{A}, similairement aux modes de réalisation précédents, cette requête contenant éventuellement le code OTP fourni à l'abonné A, lequel est alors stocké par le serveur 20 en association avec le profil Prof_{A} préparé, afin de permettre une vérification ultérieure.

Ensuite, consécutivement à un événement déclencheur du côté du terminal 10, du type de ceux décrits précédemment, l'utilisateur saisit (étape E27) sur son terminal 10 le code OTP.

Selon une première variante où le code OTP est vérifié par le serveur 20, le terminal 10 obtient à ce stade l'adresse réseau IP_{PROV} du serveur 20 de provisionnement, soit directement auprès du serveur 30 de résolution de nom de domaine (étapes E41 et E42, similaires à la figure 2), soit indirectement par l'intermédiaire d'un serveur 40 de découverte (cf. étapes E51 à E62 de la figure 3). Le terminal 10 utilise alors cette adresse réseau IP_{PROV} pour transmettre (étape E90) une requête en déclenchement du chargement du profil Prof_{A}, cette requête contenant ici le code OTP saisie par l'abonné A.

Suite à la réception de cette requête, le serveur 20 de provisionnement vérifie alors (étape E95) la validité du code OTP, après éventuellement avoir vérifié que l'abonné A a bien souscrit au préalable à une offre correspondant à un profil d'abonnement en attente de chargement.

Si le code OTP est encore valide (i.e. s'il n'a pas expiré) et que l'abonné A a bien souscrit à une offre, le serveur 20 envoie le profil Prof_{A} au terminal 10 afin de le charger et l'installer dans le module embarqué 15, comme décrit précédemment (étapes E101,E102). Une fois cette opération effectuée, le code OTP peut être invalidé par le serveur 20, avant même d'attendre son expiration, afin d'éviter qu'une autre demande de chargement de profil ne soit autorisée avec ce même code.

Si le code OTP n'est pas ou n'est plus valide, un message de redirection (non illustré) peut être transmis au terminal 10 afin de rediriger ce dernier vers un portail internet de l'opérateur OP permettant de sélectionner l'offre désirée.

Selon une autre variante, une fois le code OTP saisi par l'abonné A, l'identifiant Id_{PROV} du serveur 20 peut être construit par le terminal 10 au moyen de ce code OTP, par exemple selon un format de nom DNS du type *otp.provisioning.pdatform.domain.tdd* où *« otp »* est le code OTP saisi par l'abonné A et les autres paramètres sont ceux décrits en relation avec le premier mode de réalisation.

Le serveur 30 de noms de domaine, recevant une requête de résolution de nom contenant un tel identifiant, peut alors extraire le code OTP de cet identifiant et faire la vérification de la validité ce code (étape E43), en le comparant avec le code OTP fourni à l'abonné A que l'opérateur a transmis préalablement au serveur 30. Il ne retourne alors une réponse contenant l'adresse réseau IP_{PROV} que si ce code est valide, auquel cas la suite du processus est similaire à ce qui a été décrit précédemment.

On se réfère à présent à la **figure 6** qui illustre un terminal mobile selon un mode de réalisation de l'invention.

Ce terminal mobile 10 comprend :
- un module 11 de communication, typiquement implémenté sous la forme d'une interface radio, servant à connecter le terminal 10 à un réseau de communication mobile, pour notamment transmettre des messages telles que les requêtes décrites précédemment, générées par le module 13 de traitement, vers les équipements réseaux 20 à 40 et recevoir des réponses de ces équipements pour les fournir au module 13 pour traitement, ainsi que le profil Prof_{A} à charger dans le module embarqué 15 ci-après ;
- un module 13 de traitement, typiquement implémenté matériellement par un processeur 13₁ associé à une mémoire 13₂ (elle-même constituée par une mémoire vive et une mémoire morte, par exemple), configuré pour générer les requêtes décrites précédemment, destinées à être transmises aux équipements réseaux 20 à 40, et pour traiter les réponses à ces requêtes reçues de ces équipements ;
- un module 15 d'identification de souscripteur embarqué, typiquement formé par une puce contenant un microcontrôleur et une mémoire, intégré dans le terminal 10 et destiné à stocker des informations relatives à un abonné A d'un réseau mobile, telles que les identifiants de cet abonné A (i.e. son numéro IMSI) et de l'opérateur de télécommunications mobiles OP auquel il a souscrit (par exemple les numéros MCC et MNC de l'opérateur OP). Un tel module 15, non séparable du terminal 10 au contraire d'une carte SIM classique, est désigné habituellement par les termes « embedded SIM » ou « eUICC ».

On se réfère à présent à la **figure 7** qui illustre un premier équipement réseau du type serveur de provisionnement 20, selon un mode de réalisation de l'invention.

Ce serveur de provisionnement 20 comprend :
- un module 21 de communication, typiquement implémenté sous la forme d'une interface de communication réseau, servant à connecter le serveur 20 aux autres équipements du réseau dans lequel peut être installé ce serveur, ainsi qu'à des terminaux mobiles via à un réseau d'accès mobile, pour notamment recevoir une requête de chargement de profil d'abonnement telle que décrite précédemment, transmise par le terminal mobile 10, et transmettre un profil d'abonnement Prof_{A}, récupéré par le module de traitement 23 décrit ci-après, vers ce terminal 10 ;
- un module 23 de traitement (typiquement implémenté matériellement par un processeur 23₁ associé à une mémoire 23₂ elle-même constituée par une mémoire vive, dite RAM, et une mémoire morte, dite ROM), configuré pour consulter une module 25 de mémorisation afin d'y retrouver un profil d'abonnement prêt à être téléchargé et le fournir le cas échéant au terminal 10 au moyen du module de communication 21. Ce module 23 peut en outre être configuré pour vérifier la validité d'un code à usage unique contenu dans une requête en chargement de profil reçu du terminal 10 ;
- un module 25 de mémorisation (par exemple de type mémoire morte, dite ROM) dans lequel peuvent être mémorisés des profils d'abonnements (incluant par exemple les données d'authentification de l'abonné, l'ensemble des services souscrits pour cet abonné, les applications opérateur permettant d'assurer le service auprès de l'abonné), sous forme de fichier numérique, ainsi que des indications qu'un profil d'abonnement Prof_{A} est prêt à être chargé, par exemple sous la forme d'une table dans laquelle, pour chaque profil disponible au chargement, une indication est insérée en association avec un identifiant du module embarqué sur lequel ce profil peut être chargé, cette table pouvant être consultée par le module 23 suite à la réception d'une requête de chargement émanant du terminal 10. Ce module 25 peut être séparé du module 23 de traitement ou intégré avec la mémoire 23₂ de ce module de traitement.

On se réfère à présent à la **figure 8** qui illustre un deuxième équipement réseau du type serveur de noms de domaine 30, voire serveur de découverte 40, selon un mode de réalisation de l'invention.

Ce serveur de noms de domaine 30 comprend :
- un module 31 de communication, typiquement implémenté sous la forme d'une interface de communication réseau, servant à connecter le serveur 30 aux autres équipements du réseau dans lequel peut être installé ce serveur, ainsi qu'à des terminaux mobiles via à un réseau d'accès mobile, pour notamment recevoir une requête de résolution de nom de domaine telle que décrite précédemment, émise par le terminal mobile 10, et transmettre en retour un message de réponse contenant une adresse réseau (IP_{PROV} ou IP_{DESC}) vers ce terminal 10 ;
- un module 33 de traitement (typiquement implémenté matériellement par un processeur 33₁ associé à une mémoire 33₂ elle-même constituée par une mémoire vive, dite RAM, et une mémoire morte, dite ROM), configuré pour consulter le module de mémorisation ci-après afin d'y récupérer l'adresse réseau IP_{PROV} (respectivement IP_{DESC}) correspondant à un identifiant Id_{PROV} (respectivement Id_{DESC}) d'un serveur réseau inséré dans la requête en résolution reçue par le module 31, et le cas échéant insérer cette adresse réseau dans un message de réponse à fournir au terminal 10 au moyen du module de communication 31. Ce module 33 peut en outre être configuré pour vérifier la validité d'un code à usage unique contenu dans la requête en résolution reçue du terminal 10 ;
- un module 35 de mémorisation (par exemple de type mémoire morte, dite ROM) dans lequel peuvent être mémorisées des adresses réseaux (e.g. adresse IP) d'équipements associées à des identifiants de type nom de domaine, par exemple sous la forme d'une table listant ces éléments. Ce module 35 de mémorisation est configuré pour contenir en outre l'adresse réseau IP_{PROV} du serveur de provisionnement 20 (respectivement l'adresse réseau IP_{DESC} du serveur de découverte 40) en correspondance avec un identifiant Id_{PROV} de ce serveur 20 (respectivement un identifiant Id_{DESC} de ce serveur 40). Il peut être séparé du module 33 de traitement ou intégré avec la mémoire 33₂ de ce module de traitement.

Le serveur de découverte 40 comprend des modules similaires au serveur de noms de domaine 30, à la différence près que le module de mémorisation peut stocker, outre des adresses réseaux, des identifiants réseaux à retourner au terminal 10 sur interrogation de ce dernier.

Les modules 13, 23 et 33 sont agencés pour mettre en oeuvre des étapes du procédé d'installation de profil d'abonnement décrit précédemment, exécutées par le terminal 10 ainsi que les équipements 20 et 30. Il s'agit de préférence de modules logiciels comprenant des instructions logicielles pour faire exécuter ces étapes. La présente invention concerne donc aussi :
- un programme comprenant des instructions de programme destinées à commander l'exécution des étapes du procédé d'installation précédemment décrit qui sont exécutées soit par le terminal 10, soit par le serveur 20, soit par le serveur 30, lorsque ce programme est exécuté par le module de traitement 13, 23 ou 33 d'un de ces équipements.
- un support d'enregistrement lisible par un module de traitement 13, 23 ou 33, sur lequel est enregistré le programme ci-avant.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, l'utilisation d'un serveur de découverte intermédiaire, la vérification d'un code OTP au niveau de l'un ou l'autre des serveurs impliqués, l'utilisation d'indicateurs de disponibilité d'un profil à charger, tels que présentés précédemment ne sont pas limités aux modes de réalisation dans lesquels ils sont décrits et peuvent parfaitement être combinés au sein d'un même mode de réalisation.

## Revendications

1. Procédé d'installation d'un profil d'abonnement, souscrit auprès d'un opérateur d'un réseau mobile de télécommunications, sur un terminal mobile (10) contenant un module embarqué d'identification de souscripteur (15), comprenant le chargement (E101,E102) du profil d'abonnement dans ledit module embarqué depuis un serveur de provisionnement (20) du réseau mobile de télécommunications, le procédé comprenant les étapes suivantes, avant le chargement du profil :
émission (E41,E51) d'une requête de résolution de nom vers un serveur de noms de domaine (30);
réception (E42,E52), en réponse à ladite requête, d'un message de réponse contenant une adresse réseau (IP_{PROV},IP_{DISC}) d'un équipement réseau (20,40) ;
émission (E90,E61,E71) d'une requête vers ledit équipement réseau au moyen de ladite adresse réseau (IP_{PROV},IP_{DISC}) afin permettre le déclenchement du chargement du profil ;
le procédé étant tel que ladite requête de résolution comprend un identifiant dudit équipement réseau (20,40) permettant le déclenchement du chargement du profil, construit par le terminal mobile (10) en utilisant des identifiants du pays de fabrication et du constructeur du module embarqué et un numéro associé au serveur de provisionnement (20) , les identifiants du pays de fabrication et du constructeur du module embarqué et du numéro associé au serveur de provisionnement (20) étant extraits d'un identifiant du module embarqué.

2. Procédé selon la revendication 1, dans lequel l'équipement réseau permettant le déclenchement du chargement du profil est le serveur de provisionnement (20) et la requête émise (E90) vers ledit équipement réseau est une requête de déclenchement du chargement du profil contenant un identifiant (EID,IMEI) du module embarqué et/ou du terminal mobile.

3. Procédé selon la revendication 2, comprenant en outre la réception (E30), depuis le module embarqué, de l'identifiant dudit module embarqué.

4. Procédé selon la revendication 2, dans lequel l'identifiant du serveur de provisionnement inclut un mot de passe à usage unique (OTP), le procédé comprenant en outre la vérification dudit mot de passe à usage unique par le serveur de noms de domaine (E43) et/ou le serveur de provisionnement (E95).

5. Procédé selon la revendication 1, dans lequel l'équipement réseau permettant le déclenchement du chargement du profil est un serveur de découverte (40) distinct du serveur de provisionnement (20) et la requête émise (E61,E71) vers ledit équipement réseau est une requête d'obtention d'une information (IP_{PROV},Id_{PROV}) permettant d'envoyer une requête de déclenchement du chargement du profil au serveur de provisionnement, le procédé comprenant en outre :
réception (E62,E72) depuis le serveur de découverte, en réponse à ladite requête d'obtention, d'un message de réponse contenant ladite information (IP_{PROV},Id_{PROV}) ; et
émission (E90) d'une requête de déclenchement du chargement du profil audit serveur de provisionnement.

6. Procédé selon la revendication 5, dans lequel le serveur de découverte (40) est un serveur de noms de domaine, la requête d'obtention d'une information (IP_{PROV},Id_{PROV}) permettant d'envoyer une requête de déclenchement du chargement du profil au serveur de provisionnement est une requête de résolution de nom contenant un identifiant (Id_{PROV}) du serveur de provisionnement et l'information est une adresse réseau (IP_{PROV}) du serveur de provisionnement, la requête de déclenchement du chargement du profil étant émise (E90) au moyen de ladite adresse réseau (IP_{PROV}).

7. Procédé selon la revendication 5, dans lequel la requête d'obtention d'une information (IP_{PROV},Id_{PROV}) contient un identifiant (EID) du module embarqué et ladite information est un identifiant (ID_{PROV}) du serveur de provisionnement, le procédé comprenant en outre :
émission (E73), vers le serveur de noms de domaine (30), d'une requête de résolution de nom de domaine contenant l'identifiant (Id_{PROV}) du serveur de provisionnement ; et
réception (E74), en réponse à ladite requête de résolution, d'un message de réponse contenant l'adresse réseau (IP_{PROV}) du serveur de provisionnement ;
la requête de déclenchement du chargement du profil étant émise (E90) au moyen de ladite adresse réseau (IP_{PROV}).

8. Terminal mobile (10) comprenant un module embarqué d'identification de souscripteur (15) et un module de traitement (13) apte à installer un profil d'abonnement, souscrit auprès d'un opérateur d'un réseau mobile de télécommunications, dans le module embarqué, le module de traitement étant configuré pour :
construire un identifiant (Id_{PROV},Id_{DESC}) d'un équipement réseau (20,40) permettant le déclenchement du chargement du profil par le terminal mobile (10), en utilisant des identifiants du pays de fabrication et du constructeur du module embarqué et un numéro associé au serveur de provisionnement (20) , les identifiants du pays de fabrication et du constructeur du module embarqué et du numéro associé au serveur de provisionnement (20) étant extraits d'un identifiant du module embarque **;**
transmettre vers un serveur de noms de domaine (20) une requête de résolution de nom de domaine comprenant ledit identifiant (Id_{PROV},Id_{DESC}) dudit équipement réseau (20,40) permettant le déclenchement du chargement du profil, et
suite à la réception (E42,E52) d'un message de réponse à ladite requête de résolution contenant une adresse réseau (IP_{PROV},IP_{DISC}) dudit équipement réseau permettant le déclenchement du chargement du profil, transmettre (E90,E61) une requête audit équipement réseau afin de déclencher le chargement du profil d'abonnement depuis un serveur de provisionnement (30).

9. Serveur de noms de domaine (30) comprenant un module de mémorisation (35) dans lequel des adresses réseaux d'équipements peuvent être mémorisées en association avec des noms de domaine et un module de traitement (33) apte à consulter ledit module de mémorisation, dans lequel le module de traitement est configuré pour, suite à la réception (E90) d'une requête de résolution de nom de domaine contenant un identifiant d'un équipement réseau permettant le déclenchement du chargement du profil, transmise depuis un terminal mobile (10) contenant un module embarqué d'identification de souscripteur (15), ledit identifiant comprenant des identifiants du pays de fabrication et du constructeur du module embarqué et un numéro associé à un serveur de provisionnement (20) , les identifiants du pays de fabrication et du constructeur du module embarqué et du numéro associé au serveur de provisionnement (20) étant extraits d'un identifiant du module embarqué ; vérifier si une adresse réseau (IP_{PROV},IP_{DESC}) correspondant audit identifiant dudit équipement réseau est stockée dans le module de mémorisation ; et
lorsque la vérification est positive, transmettre (E42,E52) ladite adresse réseau au terminal mobile (10) afin de permettre audit terminal de transmettre audit équipement réseau une requête permettant le chargement d'un profil d'abonnement depuis un serveur de provisionnement (20).

10. Système comprenant un serveur de noms de domaine (30) selon la revendication 9 et un serveur de découverte (40), ledit serveur de découverte (40) comprenant un module de mémorisation (35) et un module de traitement (33) apte à consulter ledit module de mémorisation, dans lequel le module de traitement est configuré pour, suite à la réception (E61,E71) d'une requête en obtention d'une information (IP_{PROV},Id_{PROV}) permettant d'envoyer une requête de déclenchement du chargement d'un profil d'abonnement à un serveur de provisionnement (20), transmise depuis un terminal mobile (10) contenant un module embarqué d'identification de souscripteur (15) :
vérifier si ladite information (IP_{PROV},Id_{PROV}) est mémorisée dans le module de mémorisation ; et
lorsque la vérification est positive, transmettre (E62,E72) ladite information (IP_{PROV},Id_{PROV}) au terminal mobile (10) afin de permettre audit terminal de transmettre audit équipement de réseau une requête de chargement du profil d'abonnement depuis ledit serveur de provisionnement.

11. Système comprenant un serveur de noms de domaine (30) selon la revendication 9 et un serveur de provisionnement (20), ledit serveur de provisionnement comprenant un module de mémorisation (25) et un module de traitement (23) apte à consulter ledit module de mémorisation, dans lequel le module de traitement est configuré pour, suite à la réception (E90) d'une requête de chargement d'un profil d'abonnement transmise depuis un terminal mobile (10) comprenant un module embarqué d'identification de souscripteur (15), ladite requête contenant un identifiant (EID,IMEI) du module embarqué et/ou du terminal :
vérifier, au moyen dudit identifiant, si une indication qu'un profil d'abonnement (Prof_{A}) est disponible au chargement pour ledit module embarqué (15) est stockée dans le module de mémorisation ;
lorsque la vérification est positive, transmettre (E101) le profil d'abonnement (Prof_{A}) au terminal mobile (10) ; et
lorsque la vérification est négative, transmettre au terminal mobile une requête en redirection vers un portail internet permettant la sélection d'une offre d'un opérateur d'un réseau de télécommunications mobiles en vue de transmettre un profil d'abonnement correspondant à cette offre au terminal mobile.

12. Programme d'ordinateur comportant des instructions de code pour la mise en oeuvre des étapes du procédé d'installation réalisées par un terminal mobile selon l'une des revendications 1 à 7 lorsque ce programme est exécuté par un processeur du terminal mobile.

13. Support d'enregistrement, lisible par un terminal mobile , dans lequel est enregistré le programme selon la revendication 12.

## Patentansprüche

1. Verfahren zum Installieren eines Abonnementprofils für ein bei einem Mobilfunknetzbetreiber abgeschlossenes Abonnement auf einem mobilen Endgerät (10), das ein eingebettetes Teilnehmeridentifikationsmodul (15) enthält, umfassend das Laden (E101,E102) des Abonnementprofils in das eingebettete Modul von einem Provisionierungsserver (20) des Mobilfunknetzes aus, wobei das Verfahren, vor dem Laden des Profils, die folgenden Schritte umfasst:
Senden (E41,E51) einer Namensauflösungsanforderung an einen Domainnamen-Server (30);
Empfangen (E42,E52), als Antwort auf die Anforderung, einer Antwortnachricht, die eine Netzwerkadresse (IP_{PROV}, IP_{DISC}) einer Netzwerkeinrichtung (20,40) enthält; Senden (E90,E61,E71) einer Anforderung an die Netzwerkeinrichtung mittels der Netzwerkadresse (IP_{PROV}, IP_{DISC}), um das Auslösen des Ladens des Profils zu ermöglichen;
wobei das Verfahren dergestalt ist, dass die Auflösungsanforderung eine Kennung der das Auslösen des Ladens des Profils ermöglichenden Netzwerkeinrichtung (20,40) umfasst, die von dem mobilen Endgerät (10) unter Verwendung der Kennungen des Herstellungslandes und des Herstellers des eingebetteten Moduls und einer dem Provisionierungsserver (20) zugeordneten Nummer aufgebaut wird, wobei die Kennungen des Herstellungslandes und des Herstellers des eingebetteten Moduls und der dem Provisionierungsserver (20) zugeordneten Nummer aus einer Kennung des eingebetteten Moduls extrahiert werden.

2. Verfahren nach Anspruch 1, bei dem die das Auslösen des Ladens des Profils ermöglichende Netzwerkeinrichtung der Provisionierungsserver (20) ist und die an die Netzwerkeinrichtung gesendete Anforderung (E90) eine Anforderung des Auslösens des Ladens des Profils ist, die eine Kennung (EID,IMEI) des eingebetteten Moduls und/oder des mobilen Endgeräts enthält.

3. Verfahren nach Anspruch 2, umfassend ferner das Empfangen (E30), von dem eingebetteten Modul aus, der Kennung des eingebetteten Moduls.

4. Verfahren nach Anspruch 2, bei dem die Kennung des Provisionierungsservers ein Einmalpasswort (OTP) beinhaltet, wobei das Verfahren ferner das Überprüfen des Einmalpassworts durch den Domainnamen-Server (E43) und/oder den Provisionierungsserver (E95) umfasst.

5. Verfahren nach Anspruch 1, bei dem die das Auslösen des Ladens des Profils ermöglichende Netzwerkeinrichtung ein Discovery-Server (40) ist, der von dem Provisionierungsserver (20) verschieden ist, und die an die Netzwerkeinrichtung gesendete Anforderung (E61,E71) eine Anforderung des Erhaltens einer Information (IP_{PROV},Id_{PROV}) ist, die es ermöglicht, eine Anforderung des Auslösens des Ladens des Profils an den Provisionierungsserver zu senden, wobei das Verfahren ferner umfasst:
Empfangen (E62,E72), von dem Discovery-Server aus, als Antwort auf die Anforderung des Erhaltens, einer Antwortnachricht, die die Information (IP_{PROV}, ID_{PROV}) enthält; und
Senden (E90) einer Anforderung des Auslösens des Ladens des Profils an den Provisionierungsserver.

6. Verfahren nach Anspruch 5, bei dem der Discovery-Server (40) ein Domainnamen-Server ist, wobei die Anforderung des Erhaltens einer Information (IP_{PROV}, Id_{PROV}), die es ermöglicht, eine Anforderung des Auslösens des Ladens des Profils an den Provisionierungsserver zu senden, eine Namensauflösungsanforderung ist, die eine Kennung (ID_{PROV}) des Provisionierungsservers enthält, und die Information eine Netzwerkadresse (IP_{PROV}) des Provisionierungsservers ist, wobei die Anforderung des Auslösens des Ladens des Profils mittels der Netzwerkadresse (IP_{PROV}) gesendet (E90) wird.

7. Verfahren nach Anspruch 5, bei dem die Anforderung des Erhaltens einer Information (IP_{PROV}, Id_{PROV}) eine Kennung (EID) des eingebetteten Moduls enthält und die Information eine Kennung (Id_{PROV}) des Provisionierungsservers ist, wobei das Verfahren ferner umfasst:
Senden (E73), an den Domainnamen-Server (30), einer Domainnamensauflösungsanforderung, die die Kennung (ID_{PROV}) des Provisionierungsservers enthält; und
Empfangen (E74), als Antwort auf die Auflösungsanforderung, einer Antwortnachricht, die die Netzwerkadresse (IP_{PROV}) des Provisionierungsservers enthält;
wobei die Anforderung des Auslösens des Ladens des Profils mittels der Netzwerkadresse (IP_{PROV}) gesendet (E90) wird.

8. Mobiles Endgerät (10), umfassend ein eingebettetes Teilnehmeridentifikationsmodul (15) und ein Verarbeitungsmodul (13), das geeignet ist, ein Abonnementprofil für ein bei einem Mobilfunknetzbetreiber abgeschlossenes Abonnement in dem eingebetteten Modul zu installieren, wobei das Verarbeitungsmodul dazu ausgestaltet ist:
eine Kennung (Id_{PROV}, Id_{DESC}) einer das Auslösen des Ladens des Profils durch das mobile Endgerät (10) ermöglichenden Netzwerkeinrichtung (20,40) unter Verwendung der Kennungen des Herstellungslandes und des Herstellers des eingebetteten Moduls und einer dem Provisionierungsserver (20) zugeordneten Nummer aufzubauen, wobei die Kennungen des Herstellungslandes und des Herstellers des eingebetteten Moduls und der dem Provisionierungsserver (20) zugeordneten Nummer aus einer Kennung des eingebetteten Moduls extrahiert werden; an einen Domainnamen-Server (20) eine Domainnamensauflösungsanforderung zu übertragen, die die Kennung (Id_{PROV}, Id_{DESC}) der das Auslösen des Ladens des Profils ermöglichenden Netzwerkeinrichtung (20,40) umfasst; und
nach dem Empfangen (E42,E52) einer Antwortnachricht auf die Auflösungsanforderung, die eine Netzwerkadresse (IP_{PROV}, IP_{DISC}) der das Auslösen des Ladens des Profils ermöglichenden Netzwerkeinrichtung enthält, eine Anforderung an die Netzwerkeinrichtung zu übertragen (E90,E61), um das Laden des Abonnementprofils von einem Provisionierungsserver (30) aus auszulösen.

9. Domainnamen-Server (30), umfassend ein Speichermodul (35), in dem Netzwerkadressen von Einrichtungen unter Zuordnung zu Domainnamen gespeichert werden können, und ein Verarbeitungsmodul (33), das geeignet ist, das Speichermodul abzufragen, wobei das Verarbeitungsmodul dazu ausgestaltet ist, um, nach dem Empfangen (E90) einer Domainnamensauflösungsanforderung, die eine Kennung einer das Auslösen des Ladens des Profils ermöglichenden Netzwerkeinrichtung enthält und die von einem mobilen Endgerät (10) aus gesendet wird, das ein eingebettetes Teilnehmeridentifikationsmodul (15) enthält, wobei die Kennung Kennungen des Herstellungslandes und des Herstellers des eingebetteten Moduls und eine einem Provisionierungsserver (20) zugeordnete Nummer umfasst, wobei die Kennungen des Herstellungslandes und des Herstellers des eingebetteten Moduls und der dem Provisionierungsserver (20) zugeordneten Nummer aus einer Kennung des eingebetteten Moduls extrahiert werden;
zu überprüfen, ob eine Netzwerkadresse (IP_{PROV}, IP_{DESC}) , die der Kennung der Netzwerkeinrichtung entspricht, in dem Speichermodul gespeichert ist; und
wenn die Überprüfung positiv ist, die Netzwerkadresse an das mobile Endgerät (10) zu übertragen (E42,E52), um dem Endgerät zu ermöglichen, an die Netzwerkeinrichtung eine Anforderung zu übertragen, die das Laden eines Abonnementprofils von einem Provisionierungsserver (20) aus ermöglicht.

10. System, umfassend einen Domainnamen-Server (30) nach Anspruch 9 und einen Discovery-Server (40), wobei der Discovery-Server (40) ein Speichermodul (35) umfasst und ein Verarbeitungsmodul (33), das geeignet ist, das Speichermodul abzufragen, wobei das Verarbeitungsmodul dazu ausgestaltet ist, um, nach dem Empfangen (E61,E71) einer Anforderung des Erhaltens einer Information (IP_{PROV}, Id_{PROV}), die es ermöglicht, eine Anforderung des Auslösens des Ladens eines Abonnementprofils an einen Provisionierungsserver (20) zu senden, die von einem mobilen Endgerät (10) aus übertragen wird, das ein eingebettetes Teilnehmeridentifikationsmodul (15) enthält:
zu überprüfen, ob die Information (IP_{PROV},Id_{PROV}) in dem Speichermodul gespeichert ist; und
wenn die Überprüfung positiv ist, die Information (IP_{PROV},Id_{PROV}) an das mobile Endgerät (10) zu übertragen (E62,E72), um dem Endgerät zu ermöglichen, an die Netzwerkeinrichtung eine Anforderung des Ladens des Abonnementprofils von dem Provisionierungsserver aus zu übertragen.

11. System, umfassend einen Domainnamen-Server (30) nach Anspruch 9 und einen Provisionierungsserver (20), wobei der Provisionierungsserver ein Speichermodul (25) umfasst und ein Verarbeitungsmodul (23), das geeignet ist, das Speichermodul abzufragen, wobei das Verarbeitungsmodul dazu ausgestaltet ist, um, nach dem Empfangen (E90) einer Anforderung des Ladens eines Abonnementprofils, die von einem mobilen Endgerät (10) aus übertragen wird, das ein eingebettetes Teilnehmeridentifikationsmodul (15) umfasst, wobei die Anforderung eine Kennung (EID,IMEI) des eingebetteten Moduls und/oder das Endgerät enthält:
mittels der Kennung zu überprüfen, ob eine Angabe, dass ein Abonnementprofil (Prof_{A}) zum Laden für das eingebettete Modul (15) verfügbar ist, in dem Speichermodul gespeichert ist;
wenn die Überprüfung positiv ist, das Abonnementprofil (Prof_{A}) an das mobile Endgerät (10) zu übertragen (E101); und
wenn die Überprüfung negativ ist, an das mobile Endgerät eine Weiterleitungsanforderung zu einem Internetportal zu übertragen, das das Auswählen eines Angebots eines Mobilfunknetzbetreibers im Hinblick auf das Übertragen eines diesem Angebot entsprechenden Abonnementprofils an das mobile Endgerät ermöglicht.

12. Computerprogramm, das Codeanweisungen beinhaltet, die bei der Ausführung dieses Programms durch einen Prozessor des mobilen Endgeräts die von einem mobilen Endgerät ausgeführten Schritte des Installationsverfahrens nach einem der Ansprüche 1 bis 7 ausführen.

13. Speichermedium, das von einem mobilen Endgerät gelesen werden kann und auf dem das Programm nach Anspruch 12 gespeichert ist.

## Claims

1. Method for installing a subscription profile, taken out with an operator of a mobile telecommunication network, on a mobile terminal (10) containing an embedded subscriber identification module (15), comprising the loading (E101, E102) of the subscription profile into said embedded module from a provisioning server (20) of the mobile telecommunication network, the method comprising the following steps, before the loading of the profile:
sending (E41, E51) of a name resolution request to a domain name server (30);
reception (E42, E52), in response to said request, of a response message containing a network address (IP_{PROV}, IP_{DISC}) of a network element (20, 40);
sending (E90, E61, E71) of a request to said network element by means of said network address (IP_{PROV}, IP_{DISC}) in order to allow the triggering of the loading of the profile;
the method being such that said resolution request comprises an identifier of said network element (20, 40) allowing the triggering of the loading of the profile, constructed by the mobile terminal (10) by using identifiers of the country of manufacture and of the constructor of the embedded module and a number associated with the provisioning server (20), the identifiers of the country of manufacture and of the constructor of the embedded module and of the number associated with the provisioning server (20) being extracted from an identifier of the embedded module.

2. Method according to Claim 1, in which the network element allowing the triggering of the loading of the profile is the provisioning server (20) and the request sent (90) to said network element is a request to trigger the loading of the profile containing an identifier (EID, IMEI) of the embedded module and/or of the mobile terminal.

3. Method according to Claim 2, further comprising the reception (E30), from the embedded module, of the identifier of said embedded module.

4. Method according to Claim 2, in which the identifier of the provisioning server includes a one-time password (OTP), the method further comprising the verification of said one-time password by the domain name server (E43) and/or the provisioning server (E95).

5. Method according to Claim 1, in which the network element allowing the triggering of the loading of the profile is a discovery server (40) distinct from the provisioning server (20) and the request sent (E61, E71) to said network element is a request to obtain information (IP_{PROV}, ID_{PROV}) making it possible to send a request to trigger the loading of the profile to the provisioning server, the method further comprising:
reception (E62, E72) from the discovery server, in response to said obtention request, of a response message containing said information (IP_{PROV}, Id_{PROV}); and
sending (E90) of a request to trigger the loading of the profile to said provisioning server.

6. Method according to Claim 5, in which the discovery server (40) is a domain name server, the request to obtain information (IP_{PROV}, ID_{PROV}) making it possible to send a request to trigger the loading of the profile to the provisioning server is a name resolution request containing an identifier (Id_{PROV}) of the provisioning server and the information is a network address (IP_{PROV}) of the provisioning server, the request to trigger the loading of the profile being sent (E90) by means of said network address (IP_{PROV}).

7. Method according to Claim 5, in which the request to obtain information (IP_{PROV}, Id_{PROV}) contains an identifier (EID) of the embedded module and said information is an identifier (Id_{PROV}) of the provisioning server, the method further comprising:
sending (E73), to the domain name server (30), of a domain name resolution request containing the identifier (Id_{PROV}) of the provisioning server; and
reception (E74), in response to said resolution request, of a response message containing the network address (IP_{PROV}) of the provisioning server;
the request to trigger the loading of the profile being sent (E90) by means of said network address (IP_{PROV}).

8. Mobile terminal (10) comprising an embedded subscriber identification module (15) and a processing module (13) capable of installing a subscription profile, taken out with an operator of a mobile telecommunication network, in the embedded module, the processing module being configured to:
construct an identifier (Id_{PROV}, ID_{DESC}) of a network element (20, 40) allowing the triggering of the loading of the profile by the mobile terminal (10), by using identifiers of the country of manufacture and of the constructor of the embedded module and a number associated with the provisioning server (20), the identifiers of the country of manufacture and of the constructor of the embedded module and of the number associated with the provisioning server (20) being extracted from an identifier of the embedded module;
transmit a domain name resolution request comprising said identifier (ID_{PROV}, Id_{DESC}) of said network element (20, 40) allowing the triggering of the loading of the profile to a domain name server (20); and
following the reception (E42, E52) of a message in response to said resolution request containing a network address (IP_{PROV}, IP_{DISC}) of said network element allowing the triggering of the loading of the profile, transmit (E90, E61) a request to said network element in order to trigger the loading of the subscription profile from a provisioning server (30).

9. Domain name server (30) comprising a storage module (35) in which network addresses of elements can be stored in association with domain names and a processing module (33) that can consult said storage module, wherein the processing module is configured to, following the reception (E90) of a domain name resolution request containing an identifier of a network element allowing the triggering of the loading of the profile, transmitted from a mobile terminal (10) containing an embedded subscriber identification module (15), said identifier comprising identifiers of the country of manufacture and of the constructor of the embedded module and a number associated with a provisioning server (20), the identifiers of the country of manufacture and of the constructor of the embedded module and of the number associated with the provisioning server (20) being extracted from an identifier of the embedded module;
verify if a network address (IP_{PROV}, IP_{DESC}) corresponding to said identifier of said network element is stored in the storage module; and
when the verification is positive, transmit (E42, E52) said network address to the mobile terminal (10) in order to allow said terminal to transmit to said network element a request allowing the loading of a subscription profile from a provisioning server (20).

10. System comprising a domain name server (30) according to Claim 9 and a discovery server (40), said discovery server (40) comprising a storage module (35) and a processing module (33) that can consult said storage module, wherein the processing module is configured to, following the reception (E61, E71) of a request to obtain information (IP_{PROV}, ID_{PROV}) making it possible to send a request to trigger the loading of a subscription profile to a provisioning server (20), transmitted from a mobile terminal (10) containing an embedded subscriber identification module (15):
verify if said information (IP_{PROV}, Id_{PROV}) is stored in the storage module; and
when the verification is positive, transmit (E62, E72) said information (IP_{PROV}, ID_{PROV}) to the mobile terminal (10) in order to allow said terminal to transmit to said network element a request to load the subscription profile from said provisioning server.

11. System comprising a domain name server (30) according to Claim 9 and a provisioning server (20), said provisioning server comprising a storage module (25) and a processing module (23) that can consult said storage module, wherein the processing module is configured to, following the reception (E90) of a request to load a subscription profile transmitted from a mobile terminal (10) comprising an embedded subscriber identification module (15), said request containing an identifier (EID, IMEI) of the embedded module and/or of the terminal:
verifiy, by means of said identifier, to see if an indication that a subscription profile (Prof_{A}) is available for the loading for said embedded module (15) is stored in the storage module;
when the verification is positive, transmit (E101) the subscription profile (Prof_{A}) to the mobile terminal (10); and
when the verification is negative, transmit to the mobile terminal a request for redirection to an Internet portal allowing the selection of an offer of an operator of a mobile telecommunication network with a view to transmitting a subscription profile corresponding to this offer to the mobile terminal.

12. Computer program comprising code instructions for implementing the steps of the installation method carried out by a mobile terminal according to one of Claims 1 to 7 when this program is executed by a processor of the mobile terminal.

13. Storage medium, that can be read by a mobile terminal, in which is stored the program according to Claim 12.
